# EUROPEAN PATENT SPECIFICATION

(11) **EP 1 656 330 B1**
(45) Date of publication and mention of the grant of the patent: **22.07.2009**
(21) Application number: 04748865.5
(22) Date of filing: 01.06.2004
(51) Int. Cl.: C04B 28/36, E01C 7/26, C04B 24/36

(54) **METHOD FOR THE PRODUCTION OF A MIXTURE SUITABLE FOR HIGHWAY ENGINEERING WORKS**
VERFAHREN ZUR HERSTELLUNG EINER ZUR VERWENDUNG BEI STRASSENBAUARBEITEN GEEIGNETEN MISCHUNG
PROCEDE POUR LA PRODUCTION D'UN MELANGE APPROPRIE POUR LA REALISATION DE TRAVAUX SUR DES AUTOROUTES

(30) Priority: 02.06.2003 PL 36044103
(43) Date of publication of application: 17.05.2006
(73) Proprietor: Przedsiebiorstwo Produkcyjno-Uslugowo- Handlowe Marbet-Wil Spolka Z O.O., 43-346 Bielsko-Biala (PL)
(72) Inventor: MYSLOWSKI, Wlodzimierz, PL-43-300 Bielsko-Biala (PL); BERNACKA, Anna, PL-41-80 Zabrze (PL)
(74) Representative: Rygiel, Andrzej
(86) International application number: PCT/PL2004/000040
(87) International publication number: WO 2004/106260

(56) References cited:
- WO-A-01/19724
- FR-A- 2 193 122
- US-A- 3 738 853
- US-A- 4 756 763

## Description

The method for the production of a mixture for highway engineering works to be used as a construction material of increased dynamic strength, better stability and deformability useful especially in hard weather conditions is the subject of an inventive step.

Bituminous-asphalt mixes and concrete mixes have been used commonly for road repairs and construction so far, where for proper road repair or making new pavement both require complicated treatment and a long preparation time and in case of concrete it takes as long as 28 days of hardening.
The method of making sulphur binders containing sulphur and ethylenic hydrocarbon mixture in such a way that they make an eutectic mixture formed by substitutional solid sulphur solution in the volume of 93% to 98% by weight and ethylenic hydrocarbons dissolved in it, where total ethylenic hydrocarbon content does not exceed the volume of 7% by weight, is known from Polish patent application No. P-326569.

The method of fabricating sulphur-binder-based mixtures for road repairs that are characterised by a fact that sulphur and/or sulphur polymer is heated until it becomes semi-fluid or fluid, and then it is subject to sputtering, preferably in overpressure, where the area of mist obtained in such a way is entered by mineral aggregate and metallic filler in the form of preferably short metal fibres for the time of coating mineral aggregate and metallic filler completely with sulphur and/or sulphur polymer, and then it is cooled to ambient temperature, is also known from Polish patent application No. P-339314.

As regards the global prior art in the field of mixtures used in road building industry, there should be considered mixtures according to Patent Description No. US 3 738 853, which contain 6% asphalt, 12% sulphur and sand (the rest). The mixtures are in general suitable for road paving applications. They are produced by mixing all the components together and heating at a temperature between 126,667°C and 176,667°C.

According to Patent Description No. FR 2 193122, there is also known a method of fabricating a mixture suitable for road engineering works wherein sand and asphalt are heated to 150°C, molten sulphur is added and the mixture is used to pour onto substrate, whilst according to Patent Description No. US 4 756 763, there is a method wherein asphalt and sulphur are compounded and prepared in form of pellets, which are used as a binder for crushed stones and/or sand. The mixtures are used as paving for roadways. That method involves using asphalt, calcium hydroxide filter and sand.
It is known, from publication WO 01/19724, to form paving composition comprising 4% to 10% of polysulphide-asphalt blend, 65% to 85% by weight aggregate. 3% to 10% stone powder and 8% to 25% by weight sand. The polysulphide-asphalt blend is constituted mainly of asphalt, thus polysulphide is an additive and cannot be considered the binder.

The method for the production of a mixture for highway engineering works according to the inventive step is characterised by a fact that asphalt in the quantity of 4% to 6% by weight is heated to temperature between 100°C and 110°C and mixed with sand, preferably with waste moulding sand, in quantities between 64% and 76% by weight, 5-14 mm cut aggregate in quantities between 10% and 15% by weight, and then sulphur polymer is added in the form of granulate, flakes or in a similar state of aggregation in quantities between 10% and 15% by weight, and the whole mix is heated and mixed in temperature between 120°C and 130°C for about 15 minutes, and then poured onto initially prepared subgrade.

The method for the production of a mixture for highway engineering works according to the inventive step is characterised by a fact that asphalt in the quantity of 4% to 6% by weight is heated to temperature between 100°C and 110°C and mixed with sand, preferably with waste moulding sand, in quantities between 64% and 76% by weight, 5-14 mm cut aggregate in quantities between 10% and 15% by weight, and then sulphur polymer is added in the form of granulate, flakes or in a similar state of aggregation in quantities between 10% and 15% by weight, and the whole mix is heated and mixed in temperature between 120°C and 130°C for about 15 minutes, and then poured onto initially prepared subgrade.

Sulphur-binder-based mix for highway engineering is characterised by high dynamic strength ranging from 60 MPa through 80 MPa achieved in 70% right after completing the process of pouring, resistance to high and low temperatures reaching even -30°C and insensitivity to precipitation, where full strength is achieved after 24 hours.
**Example 1.** The method of fabricating mix for highway engineering consists in a fact that asphalt in the quantity of 4% by weight is heated to temperature between 100°C and 110°C and mixed with sand, in the quantity of 76% by weight, 5-14 mm cut aggregate in quantities by weight from 10% on, and then sulphur polymer is added in the form of granulate, flakes or in a similar state of aggregation and in the quantity of 10% by weight, and the whole mix is heated and mixed in temperature between 120°C and 130°C for 15 minutes, and then poured onto initially prepared subgrade.
**Example 2.** The method of fabricating mix for highway engineering consists in a fact that asphalt in the quantity of 6% by weight is heated to temperature between 100°C and 110°C and mixed with sand, preferably with waste moulding sand in the quantity of 69% by weight, 5-14 mm cut aggregate in quantities by weight from 15% on, and then sulphur polymer is added in the form of granulate, flakes or in a similar state of aggregation and in the quantity of 10% by weight, and the whole mix is heated and mixed in temperature between 120°C and 130°C for about 15 minutes, and then poured onto initially prepared subgrade.

## Claims

1. The method for the production of a mixture for highway engineering works **characterised by a** fact that asphalt in the quantity of 4% to 6% by weight is heated to temperature between 100°C and 110°C and mixed with sand, preferably with waste moulding sand, in quantities between 64% and 76% by weight, 5-14 mm cut aggregate in quantities between 10% and 15% by weight, and then sulphur polymer is added in the form of granulate, flakes or in a similar state of aggregation in quantities between 10% and 15% by weight, and the whole mix is heated and mixed in temperature between 120°C and 130°C for about 15 minutes, and then poured onto initially prepared subgrade.

## Patentansprüche

1. Die Methode zur Herstellung der Mischung für Schnellstraßenbau **gekennzeichnet dadurch, dass** der Asphalt in einer Menge von 4 bis 6 Gew.-% bis die Temperatur zwischen 100 und 110 °C erhitzt wird und mit dem Sand, vorzugsweise mit dem Formsand aus Abfall, in einer Menge zwischen 64 und 76 Gew.-%, mit dem Zuschlagstoff mit der Körnung von 5 bis 14 mm in einer Menge zwischen 10 und 15 Gew.-% vermischt wird, und dann das zerkleinerte Schwefel-Polymer in Form von Granulat, Schnitzel oder in einem anderen Aggregatzustand in einer Menge zwischen 10 und 15 Gew.-% zugegeben wird und dann die ganze Mischung, indem sie in der Temperatur zwischen 120 und 130 °C ca. 15 Minuten lang gemischt wird, erwärmt und auf einen zuvor vorbereiteten Straßenboden ausgegossen wird.

## Revendications

1. Procédé de fabrication du mélange pour les chaussées de route express **caractérisé en ce que** le bitume en quantité de 4 à 6% du poids est chauffé à une température entre 100 et 110 °C et mélangé avec du sable favorablement avec du sable de fonderie recyclé en quantité entre 64 et 76% du poids, avec de l'agrégat de fraction 5-14 mm en quantité entre 10 et 15% du poids et ensuite on y ajoute du polymère de soufre broyé sous forme de granulé, flocons ou similaire en quantité entre 10 et 15% du poids et on chauffe tout le mélange ainsi obtenu à une température entre 120 et 130 °C pendant environ 15 minutes et ensuite on le verse sur la sous-couche préparée préalablement.
